# EUROPEAN PATENT APPLICATION

(11) **EP 4 764 812 A1**
(43) Date of publication of application: **24.06.2026**
(21) Application number: 25220756.8
(22) Date of filing: 04.12.2025
(51) Int. Cl.: G06F 3/06

(54) **STORAGE DEVICE**

(30) Priority: 23.12.2024 KR 20240194664
(71) Applicant: SAMSUNG ELECTRONICS CO., LTD., Yeongtong-gu Suwon-si, Gyeonggi-do 16677 (KR)
(72) Inventor: LEE, Sunmi, 16677 Suwon-si, Gyeonggi-do (KR); KANG, Jiyeun, 16677 Suwon-si, Gyeonggi-do (KR); PARK, Young-Ho, 16677 Suwon-si, Gyeonggi-do (KR); YOO, Sun-Mi, 16677 Suwon-si, Gyeonggi-do (KR); LEE, Sehwan, 16677 Suwon-si, Gyeonggi-do (KR); LEE, Young-Sik, 16677 Suwon-si, Gyeonggi-do (KR)
(74) Representative: Kuhnen & Wacker Patent- und Rechtsanwaltsbüro PartG mbB

(57) **Abstract**

A storage device (300) is provided. The storage device (300) includes a non-volatile memory device (320) configured to store first data (DATA) and second data (DATA), a buffer memory (330) configured to allocate a first data buffer area (DB) in which the first data (DATA) is stored and a second data buffer area (DB) in which the second data (DATA) is stored, in response to receiving a first write request (RQ_w) for the first data (DATA) and a second write request (RQ_w) for the second data (DATA), and a storage controller (310) configured to release the first data buffer area (DB) before completion of a first program operation for the first data (DATA) on the non-volatile memory device (320) based on a predetermined operating condition, and release the second data buffer area (DB) after completion of a second program operation for the second data(DATA) on the non-volatile memory device (320) based on the operating condition.

## Description

### BACKGROUND

As electronic devices continue to advance in performance and the required computational processing speed increases, the demand for high-capacity data storage and high-speed data processing is increasing. For example, many large-scale services targeting various applications (e.g. cloud-based services) may be hosted by multiple servers in data centers, and these data centers are increasingly using storage devices that adopt the Peripheral Component Interconnection-Express (PCI-E) protocol, NVM Express (NVMe) protocol, etc., which provide high-speed data transfer performance with host devices.

### SUMMARY

In order to comply with the performance requirements of a write operation in PCI-E standards, NVMe protocol, etc., storage devices may perform an Early Buffer Release (EBR) operation for the write operation by writing data to a write data buffer area in a buffer memory of the storage device, completing a write request, and releasing the write data buffer area from the buffer memory before completing a program operation on a non-volatile memory device.

Some implementations of the present disclosure provide a storage device that dynamically responds to the state of a non-volatile memory device to improve overall operational performance.

Some implementations provide a storage device that dynamically responds to input/output requests from a host device to improve overall operational performance.

According to some implementations, a storage device including a non-volatile memory device configured to store first data and second data, a buffer memory configured to allocate, in response to receiving a first write request for the first data and a second write request for the second data, a first data buffer area for storing the first data and a second data buffer area for storing the second data, and a storage controller configured to release, based on a first operating condition the first data buffer area before a completion of a first program operation for writing the first data in the non-volatile memory device, and release, based on a second operating condition, the second data buffer area after a completion of a second program operation for writing the second data in the non-volatile memory device may be provided.

According to some implementations, a storage device including a non-volatile memory device configured to store first data, a buffer memory configured to allocate, in response to receiving a first write request for the first data, a first data buffer area for storing the first data, and a storage controller that is configured to control a release timing of the first data buffer area based on a number of free blocks in the non-volatile memory device may be provided.

According to some implementations, a storage device including a non-volatile memory device configured to store a data, a buffer memory configured to allocate, in response to receiving a write request for the data, a data buffer area for storing the data, and a storage controller that is configured to control a release timing of the data buffer area based on an operating condition for the write request may be provided.

According to some implementations, a method of operating storage device including receiving a write request for a data, allocating, in response to the write request, a data buffer area in a buffer memory, storing the data in the data buffer area, outputting a response signal to the write request, performing a program operation for writing the data in a non-volatile memory device; and determining a release timing of the data buffer area based on at least one of a state of the non-volatile memory device and an operating condition for the write request may be provided.

### BRIEF DESCRIPTION OF THE DRAWINGS

FIG. 1 is a block diagram illustrating a storage system according to some implementations.
FIG. 2 is a block diagram illustrating a storage controller according to some implementations.
FIG. 3 is a block diagram illustrating a buffer memory according to some implementations.
FIG. 4 is a block diagram illustrating a non-volatile memory device according to some implementations.
FIG. 5 is a drawing for explaining a three-dimensional structure of a memory cell array according to some implementations.
FIGs. 6 and 7 are ladder diagrams illustrating write operations of a storage system according to some implementations.
FIG. 8 is a flowchart illustrating a method of operating a storage device according to some implementations.
FIG. 9 is a diagram illustrating a method of operating a storage device according to some implementations.
FIGs. 10 and 11 are timing diagrams illustrating a method of operating a storage device according to some implementations.
FIGs. 12 to 14 are drawings for explaining a method of operating a storage device according to some implementations.
FIGs. 15 to 17 are drawings for explaining a method of operating a storage device according to some implementations.
FIGs. 18 and 19 are drawings for explaining a method of operating a storage device according to some implementations.
FIG. 20 is a drawing illustrating a method of operating a storage device according to some implementations.
FIG. 21 is a block diagram illustrating a computing system including a storage device according to some implementations.
FIG. 22 is a block diagram illustrating a data center to which a storage device according to some implementations is applied.

### DETAILED DESCRIPTION

The present disclosure may be implemented in many different forms and is not limited to the implementations described herein. The present disclosure may be implemented in many different forms and is not limited to the implementations described herein.

In order to clearly explain the present disclosure, parts irrelevant to the description are omitted, and identical or similar reference numerals are assigned to identical or similar components throughout the specification.

In addition, the size and thickness of each component illustrated in the drawing are arbitrarily illustrated for convenience of explanation, so the present disclosure is not necessarily limited to what is illustrated.

In addition, unless explicitly stated to the contrary, the word "comprise," and variations such as "comprises" and "comprising," should be understood to imply the inclusion of stated elements but not the exclusion of any other elements.

It should be further understood by those skilled in the art that if a specific number of an introduced claim recitation is intended, such an intent will be explicitly recited in the claim, and in the absence of such recitation no such intent is present. For example, to facilitate understanding, the following appended claims may contain usage of the introductory phrases "at least one" and "one or more" to introduce claim recitations. However, the use of such phrases should not be understood as a limitation described by the unambiguous article "one," for one example.

Furthermore, in those instances where a convention analogous to "at least one of A, B, and C, etc." is used, in general such a construction is intended in the sense in which one having skill in the art would understand the convention (e.g., "a system having at least one of A, B, and C" would include but not be limited to systems that have A alone, B alone, C alone, A and B together, A and C together, B and C together, and/or A, B, and C together, etc.). A and B may be singular or plural.

Alternatively, a disjunctive word and/or phrase presenting two or more alternative terms, whether in the description, claims, or drawings, should be understood as likely to include one of the terms, either of the terms, or both of the terms unless context dictates otherwise. For example, the phrase "A or B" should be typically understood to include the possibilities of "A" or "B" or "A and B."

In this specification, "a module," "a unit," or "a part" perform at least one function or operation, and may be realized as hardware, such as a processor or integrated circuit, software that is executed by a processor, or a combination thereof.

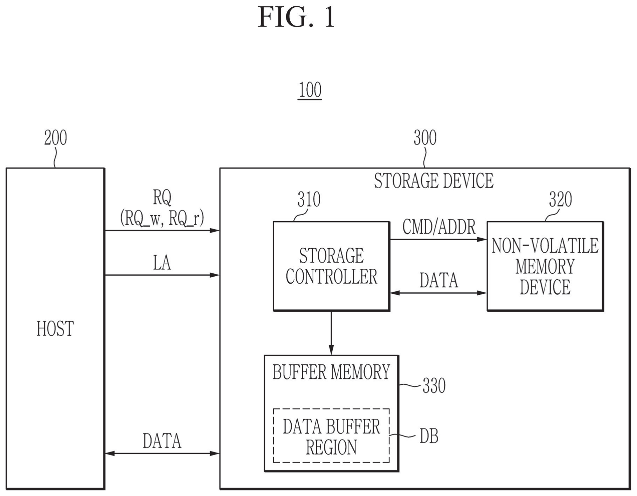

FIG. 1 is a block diagram illustrating a storage system according to some implementations.

Referring to FIG. 1, a storage system 100 may include a host device 200 and a storage device 300. According to some implementations, the storage system 100 may be provided as one of computing systems, such as an Ultra Mobile PC (UMPC), a workstation, a net-book, a Personal Digital Assistant (PDA), a portable computer, a web tablet, a wireless phone, a mobile phone, a smart phone, an e-book, a Portable Multimedia Player (PMP), a portable game console, a navigation device, a black box, a digital camera, a Digital Multimedia Broadcasting (DMB) player, a digital audio recorder, a digital audio player, a digital picture recorder, a digital picture player, a digital video recorder, a digital video player, a server, and a data center.

The host device 200 may provide an operation request RQ and a logical address LA to the storage device 300 and transmit and receive data DATA with the storage device 300. The operation request RQ may include an input/output request including a write request RQ_w for data DATA and a read request RQ_r for data DATA, and a setup request for a storage device 300.

The host device 200 may provide the write request RQ_w and the read requests RQ_r with various input/output patterns.

For example, in a sequential write pattern, the host device 200 may provide the storage device 300 with the write requests RQ_w for the logical address LA in sequential order. Additionally, in a read-after-write pattern, the host device 200 may sequentially provide both a write request RQ_w and a read request RQ_r for the same logical address LA with respect to data DATA to the storage device 300. Additionally, in a sequential read pattern, the host device 200 may provide the storage device 300 with the read requests RQ_r for the logical address LA in sequential order. The setup request may include a setup request for an Early Buffer Release (hereinafter, EBR) mode corresponding to the logical address LA, a request for creation and modification of a namespace, and a request for status reporting of the storage device 300, and the technical idea of the present disclosure is not limited thereto. If the setup request is a setup request for an EBR mode corresponding to the logical address LA, mode setting data corresponding to the logical address LA may also be provided to the storage device 300.

The logical address LA may be an address from a logical perspective managed from the perspective of the host device 200 and may be referred to as a Logical Block Address LBA. For example, the size of data DATA defined by one logical address (LA) may be 512B or 4KB, but is not limited to. Additionally, the host device 200 may provide a namespace ID along with the logical address LA to the storage device 300.

The host device 200 may exchange data, etc., with the storage device (300) based on at least one of various interface protocols, such as the PCI-E protocol, the NVMe protocol, the PCI protocol, the Universal Serial Bus (USB) protocol, the Multi-Media Card (MMC) protocol, the Advanced Technology Attachment (ATA) protocol, the Serial-ATA protocol, the Parallel-ATA protocol, the Small Computer Small Interface (SCSI) protocol, the Enhanced Small Disk Interface (ESDI) protocol, the Integrated Drive Electronics (IDE) protocol, the Mobile Industry Processor Interface (MIPI) protocol, the Universal Flash Storage (UFS) protocol, etc. For example, the host device 200 may transmit data DATA to the storage device 300 based on the PCI-E protocol, and can transmit data DATA to the storage device 300 at a transmission speed of 1,500 MB/s to 10,000 MB/s in a sequential write pattern.

The storage device 300 may include a storage controller 310, a non-volatile memory device 320, and a buffer memory 330. According to some implementations, the storage device 300 operates based on the NVMe protocol and may support multi-namespaces. NVMe is a register-level interface that communicates between a storage device such as a solid state drive(SSD) and the software of a host device. It is based on a physical/transport layer such as PCI-E or CXL, and may be an interface optimized for SSDs.

If the multi-namespace function is supported, a single physical device, the non-volatile memory device 320, may be divided into multiple logical partitions (i.e., namespaces) and data may be managed based on the namespaces. Multiple namespaces are physically included in the same non-volatile memory device 320, and each namespace is used as an individual storage space and can be distinguished by a namespace ID provided from the host device 200.

The storage controller 310 may provide a physical connection between the host device 200 and the storage device 300. That is, the storage controller 310 may provide an interface with the storage device 300 in response to a protocol with the host device 200. In particular, the storage controller 310 may decode the operation request RQ provided from the host device 200. Depending on the decoded result, the storage controller 310 may access the non-volatile memory device 320.

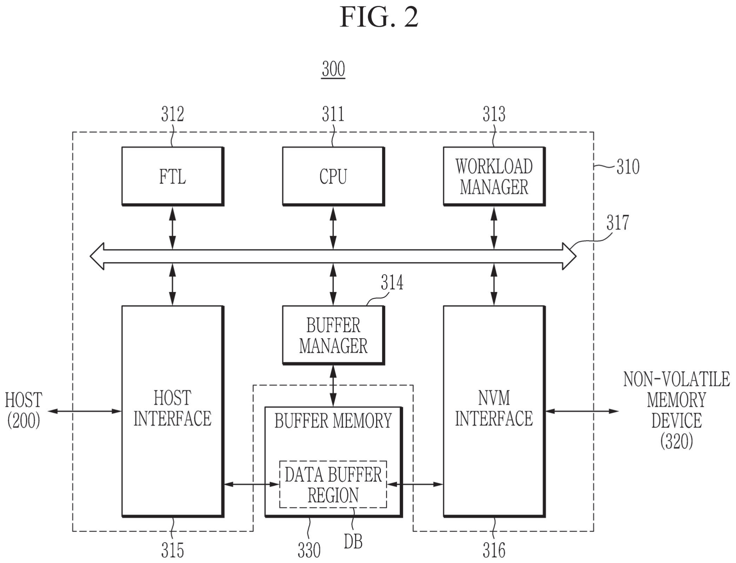

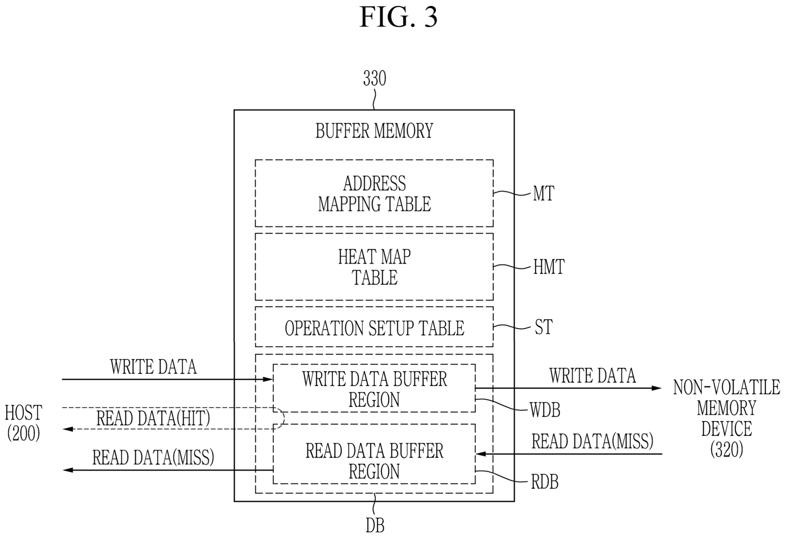

The storage controller 310 may provide an address ADDR, a command CMD, and a control signal to the non-volatile memory device 320 in response to the operation request RQ and the logical address LA, thereby controlling the non-volatile memory device 320 to perform program, read, and erase operations. Additionally, the storage controller 310 may manage allocation and release of areas for the buffer memory 330 and cache operations for the buffer memory 330. The component and operation of the storage controller 310 are described in detail later in the description of FIGs. 2 and 3.

The non-volatile memory device 320 may perform program, read, and erase operations on data DATA in response to signals received from the storage controller 310. A non-volatile memory device 320 may include at least one memory cell array. The memory cell array may include a plurality of memory cells arranged in regions where a plurality of word lines and a plurality of bit lines intersect, and the plurality of memory cells may be non-volatile memory cells.

The non-volatile memory device 320 may include NAND Flash Memory, Vertical NAND (VNAND), NOR Flash Memory, Resistive Random Access Memory (RRAM), Phase-Change Memory (PRAM), Magnetoresistive Random Access Memory (MRAM), Ferroelectric Random Access Memory (FRAM), Spin Transfer Torque Random Access Memory (STT-RAM), etc., and may include a combination thereof.

The non-volatile memory device 320 may be a memory in the form of a memory die, and accordingly, the storage device 300 may be a packaged chip including a plurality of dies, but is not limited thereto, and according to some implementations, the non-volatile memory device 320 may be a memory in the form of a packaged single chip. In the drawing, the storage device 300 is illustrated as including one non-volatile memory device 320, but is not limited thereto and, according to some implementations, a plurality of non-volatile memory devices may be placed in the storage device 300.

The buffer memory 330 may include a data buffer area DB. The buffer memory 330 may be implemented as SRAM, DRAM, PRAM, RRAM, FRAM, and MRAM. The buffer memory 330 may temporarily store data to be written or data read from the non-volatile memory device 320 provided from the host device 200 in the data buffer area DB. According to some implementations, before the buffer memory 330 temporarily stores write data and read data, the storage controller 310 may allocate the data buffer area DB to the buffer memory 330.

In general, the data transfer speed by protocol with the host device 200 may be faster than the channel transfer speed in the non-volatile memory device 320, and for example, the speed at which data is transferred in a sequential write pattern may be faster than the channel transfer speed in the non-volatile memory device 320. A device such as an SSD is equipped with multiple non-volatile memory devices 320 and can overcome the speed difference by operating the non-volatile memory devices 320 in parallel through the buffer memory 330.

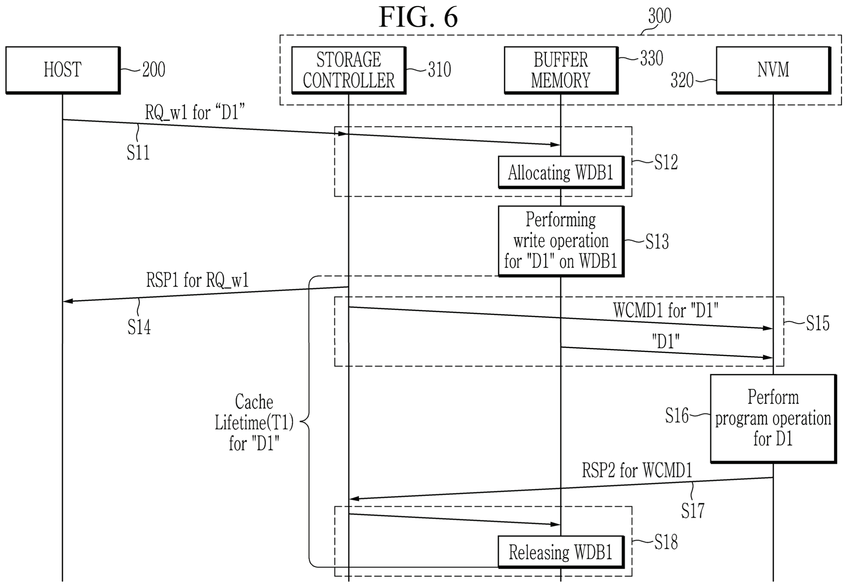

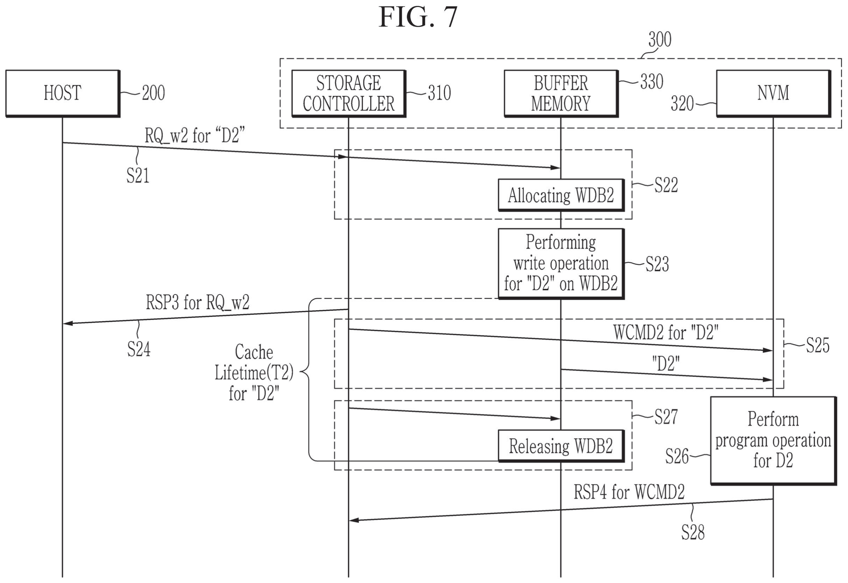

In addition, along with the parallel operation as described above, when a write request RQ_w following a sequential write pattern is received from the host device 200, the storage controller 310 may complete the request once the data is written to an allocated data buffer area DB. After completing the write request RQ_w, the storage controller 310 may release a part of the DB in the buffer memory 330 and continuously reallocate the data buffer area DB for subsequent data before the program operation in the non-volatile memory device 320 is completed, thereby ensuring high-speed data transfer. As described above, releasing a part of the data buffer area DB of the buffer memory 330 before the program operation in the non-volatile memory device 320 is completed may be referred to as EBR. A description of the EBR is provided in detail later in the description of FIGs. 6 and 7.

However, if the state of the non-volatile memory device 320 is such that it cannot perform a program operation at high speed, such as performing garbage collection, it is difficult for the storage device 300 to satisfy a high-speed data transfer speed for the protocol with the host device 200. According to some implementations, if the state of the non-volatile memory device 320 is such that it cannot perform a program operation at high speed, the storage device 300 may release a portion of the data buffer area DB after the program operation in the non-volatile memory device 320 is completed without performing EBR.

In addition, when a read request RQ_r from a host device 200 is received, if data existing in a non-volatile memory device 320 is cached in a buffer memory 330, the buffer memory 330 may perform a cache operation that directly provides the cached data to the host device 200. For example, when receiving the write request RQ_w and the read request RQ_r in a read-after-write pattern, a part of the data buffer area DB may be released after the program operation in the non-volatile memory device 320 is completed, without performing EBR, thereby increasing the cache life and improving cache performance.

As described above, in response to a situation in which high-speed data transmission such as a sequential write pattern is difficult to perform based on the state of the non-volatile memory device 320 or a situation advantageous for a cache hit, such as when a read request RQ_r is received sequentially after a write request RQ_w, the storage controller 310 may release a portion of the data buffer area DB of the buffer memory 330 after the program operation in the non-volatile memory device 320 is completed, without performing EBR.

The storage device 300 may dynamically control EBR operation based on information provided from the operation request RQ of the host device 200 or the state of the non-volatile memory device 320, thereby improving the overall operation performance.

FIG. 2 is a block diagram illustrating a storage controller according to some implementations. FIG. 3 is a block diagram illustrating a buffer memory according to some implementations.

Referring to FIGs. 1 to 3, the storage controller 310 may include a central processing unit (CPU) 311, a flash translation layer (FTL) 312, a workload manager 313, a buffer manager 314, a host interface 315, a memory interface 316, and a bus 317. Each component 311 to 316 may be electrically connected through a bus 317 and may perform data communication.

The CPU 311 may control the overall operation of the storage device 300 in response to a request from the host device 200. The CPU 311 may transmit various control information required for read and write operations of the storage device 300 to registers of the host interface 315 and the memory interface 316. For example, when a request is input from the outside, the request may be stored in a register (not shown) of the host interface 315. The host interface 315 may notify the CPU 311 that a read/write request has been input, according to the stored request. The above operation also occurs between the CPU 311 and the memory interface 316. The CPU 311 may control each component based on the firmware that operates the storage device 300.

. In Fig. 2, the CPU 311 is illustrated as one component, but it may be implemented as two or more multi-processors.

Each of the multi-processors included in the CPU 311 may divide and process control operations. That is, the storage device 300 may perform multi-tasking by multi-processors. Additionally, a storage device 300 including multi-processors may perform parallel processing.

FTL 312 may provide an interface between the host device 200 and the non-volatile memory device 320 so that the non-volatile memory device 320 may be used efficiently. According to some implementations, FTL 312 may perform address mapping operations, garbage collection operations, wear leveling operations, read reclaim operations, log operations for degradation information of memory blocks or sub-blocks, etc. as a memory management module. For example, the FTL 312 may perform an address mapping operation based on an address mapping table MT loaded into a buffer memory 330, and each list in the address mapping table MT may include mapping information between a logical address LA and a physical address of a non-volatile memory device 320.

FTL 312 may receive free block information from a non-volatile memory device 320, check the number of free blocks of the non-volatile memory device 320 based on the received free block information, and compare the number of checked free blocks with a predetermined threshold value to control a garbage collection operation in the non-volatile memory device 320. In response to the number of free blocks being greater than a predetermined threshold, the FTL 312 may determine that the non-volatile memory device 320 is in a clean state and control the non-volatile memory device 320 so that a garbage collection operation is not performed. In response to the number of free blocks being less than a predetermined threshold, the FTL 312 may determine that the non-volatile memory device 320 is in a sustained state and control the non-volatile memory device 320 so that a garbage collection operation is performed.

FTL 312 may provide the buffer manager 314 with information on whether a garbage collection operation is performed in the non-volatile memory device 320, and the buffer manager 314 may control EBR for the buffer memory 330 in response to whether the garbage collection operation is performed. For example, the FTL 312 may provide the non-performance of the garbage collection operation of the non-volatile memory device 320 to the buffer manager 314. In response to the non-performance of the garbage collection operation of the non-volatile memory device 320, the buffer manager 314 may control the buffer memory 330 to perform EBR. Similarly, the FTL 312 may provide the buffer manager 314 with the garbage collection operation of the non-volatile memory device 320. In response to the garbage collection operation of the non-volatile memory device 320, the buffer manager 314 may control the buffer memory 330 to not perform EBR. When the non-volatile memory device 320 performs garbage collection, it is difficult to satisfy a high-speed data transfer speed for a protocol with the host device 200 because the non-volatile memory device 320 cannot perform program operations at high speed.

FTL 312 may be provided in hardware form as a dedicated circuit, but is not limited thereto. According to some implementations, FTL 312 may be provided in software form, and if provided in software form, may be loaded into buffer memory 330 and operated by CPU 311. For example, the FTL 312 and the address mapping table MT may be stored in the buffer memory 330. The FTL 312 and address mapping table MT stored in the buffer memory 330 may be operated by the CPU 311.

The workload manager 313 may identify the input/output pattern of data DATA for a write request RQ_w from the host device 200. The workload manager 313 may determine the input/output pattern in various ways. For example, the workload manager 313 may determine a sequential write pattern when the write requests RQ_w are received in sequential order for consecutive logical addresses LA (e.g., sequentially increasing logical block addresses). For example, the workload manager 313 may determine a sequential write pattern when the size of data input consecutively exceeds a reference value (e.g., 16 KB). For example, the workload manager 313 may determine a read-after-write pattern that occurs when the write request RQ_w and the read request RQ_r are sequentially provided for data of the same logical address LA. According to some implementations, the workload manager 313 may determine the input/output pattern of data for the write request by an algorithm such as Least Recently Used (LRU), Clean-First LRU (CFLRU), Clock Algorithm (CA), Second Chance (SC), and Multi-Dimensional Hashing (MDH).

The workload manager 313 may provide the buffer manager 314 with information on whether data DATA of a sequential write pattern is received from the host device 200, and the buffer manager 314 may control the EBR for the buffer memory 330 in response to whether data of a sequential write pattern is received. For example, the workload manager 313 may provide the buffer manager 314 with respect to the reception of data DATA of a sequential write pattern from the host device 200. The buffer manager 314 may control the buffer memory 330 to perform EBR in response to the reception of data DATA of the sequential write pattern from the host device 200. Similarly, the workload manager 313 may provide the buffer manager 314 with respect to the reception of data DATA of a read-after-write pattern from the host device 200, and the buffer manager 314 may control the buffer memory 330 to not perform EBR in response to the reception of data DATA of a read-after-write pattern from the host device 200.

The workload manager 313 may be provided in hardware form as a dedicated circuit, but it is not limited thereto. According to some implementations, the workload manager 313 may be provided in software form, and if provided in software form, may be loaded into a buffer memory 330 and operated by the CPU 311. For example, the workload manager 313 may be stored in the buffer memory 330. The workload manager 313 stored in the buffer memory 330 may be operated by the CPU 311.

The buffer manager 314 may control the operation of the buffer memory 330. In response to receiving an operation request RQ from the host device 200, the buffer manager 314 may allocate a data buffer area DB in which data DATA is temporarily stored as a cache manager. For example, in response to receiving a write request RQ_w from the host device 200, the buffer manager 314 may, as a cache manager, allocate a write data buffer area WDB in which data DATA will be temporarily stored. In response to receiving a read request RQ_r from the host device 200, the buffer manager 314 may, as a cache manager, allocate a read data buffer area RDB in which data DATA will be temporarily stored. According to some implementations, the buffer manager 314 may distinguish between the write data buffer area WDB and the read data buffer area RDB and allocate and release the write data buffer area WDB and the read data buffer area RDB and manage the write data buffer area WDB and the read data buffer area RDB to improve data processing efficiency, data integrity, and conflict stability between input/output operations.

The buffer manager 314 may manage a heat map table HMT loaded into the buffer memory 330 and manage data in the data buffer area DB based on the heat map table (HMT). Each list in a heat map table HMT may contain information such as access frequency information for the logical address LA and whether the data is hot or cold. In Fig. 3, the heat map table HMT and the address mapping table MT are shown as being loaded into different areas of the buffer memory 330, but are not limited thereto and may be managed as a single metadata table according to an implementation.

According to some implementations, the buffer manager 314 may manage an operation mode setting table ST loaded into the buffer memory 330 and determine the performance of EBR for the data buffer area DB based on the operation mode setting table ST. Each list in the operation mode setting table ST may include information such as the range of logical addresses LA and whether EBR is performed. In Fig. 3, the operation mode setting table ST and the address mapping table MT are shown as being loaded into different areas of the buffer memory 330, but are not limited thereto and may be managed as a single metadata table according to an implementation.

According to some implementations, the buffer manager 314 may control allocation and release of the data buffer area DB in the buffer memory 330 based on information provided from a component of the storage controller 310. The buffer manager 314 may control the EBR for the buffer memory 330 based on whether a garbage collection operation is performed, as provided by the FTL 312, or whether data DATA of a sequential write pattern is received, as provided by the workload manager 313

For example, in response to non-performance of a garbage collection operation of a non-volatile memory device 320, the buffer manager 314 may control the buffer memory 330 to perform EBR. Additionally, in response to receiving data DATA of a sequential write pattern from the host device 200, the buffer manager 314 may control the buffer memory 330 to perform EBR.

According to some implementations, the buffer manager 314 may control allocation and release of a data buffer area DB in the buffer memory 330 based on the logical address LA provided with a write request RQ_w. The buffer manager 314 may control the EBR for the buffer memory 330 in response to the logical address LA corresponding to the mode setting data for the EBR provided from the host device 200 or a namespace ID provided together with the logical address LA.

According to some implementations, the buffer manager 314 may control allocation and release of the data buffer area DB in the buffer memory 330 based on whether the data is hot data. The buffer manager 314 may control the EBR for the buffer memory 330 in response to whether the data DATA of the write request RQ_w is hot data. For example, in response to the data DATA of the write request RQ_w being hot data, the buffer manager 314 may control the buffer memory 330 to not perform EBR.

The host interface 315 provides an interface with the host device 200. The host interface 315 may provide a physical layer and a transport layer. The connection between the host device 200 and the non-volatile memory device 320 may be implemented via a wired and/or wireless host interface 315. The host interface 315 may include one of various interface protocols such as PCI-E, PCI, USB, MMC, SAS, SATA, PATA, SCSI, ESDI, and IDE.

The buffer memory 330 may temporarily store data DATA transmitted from the host device 200 or data DATA to be transmitted to the host device 200. Taking FIG. 3 as an example, data DATA provided through a host interface 315 may be temporarily stored in a write data buffer area WDB, and then the temporarily stored data DATA may be provided to a non-volatile memory device 320 through a memory interface 316.

The buffer memory 330 may support a cache operation in the read operation of the storage device 300, so that when data DATA existing in the non-volatile memory device 320 becomes a cache hit, the data DATA cached may be directly provided to the host device 200. Taking Fig. 3 as an example, when a cache hit occurs, data DATA cached in the write data buffer area WDB is copied to the read data buffer area RDB, and the copied data DATA may be provided to the host device 200 through the host interface 315. In response to a cache miss, data DATA provided through the memory interface 316 may be temporarily stored in the read data buffer area RDB, and then the temporarily stored data DATA may be provided to the host device 200 through the host interface 315.

The memory interface 316 may transmit commands and data, such as program, read, and erase, to a non-volatile memory device 320. Additionally, the memory interface 316 and the non-volatile memory device 320 may be connected through a memory channel. According to some implementations, the memory interface 316 may include an ECC engine (not shown) for error correction.

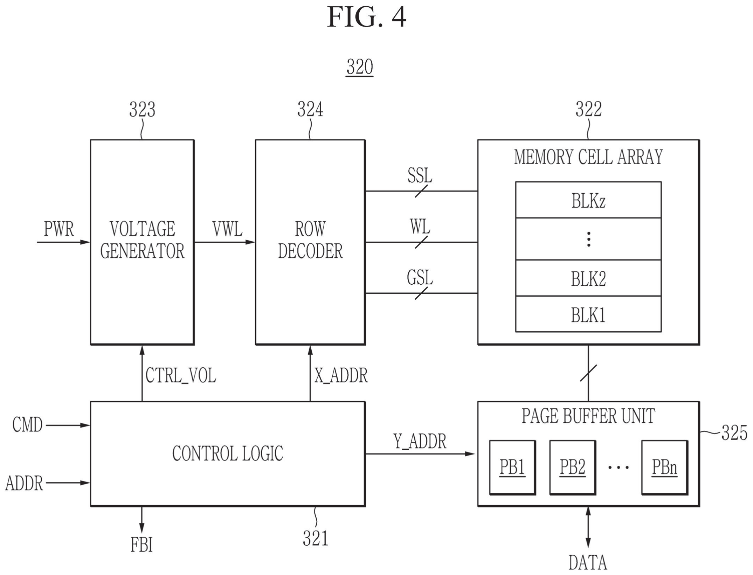

FIG. 4 is a block diagram illustrating a non-volatile memory device according to some implementations.

Referring to FIG. 4, a non-volatile memory device 320 may include a control logic circuit 321, a memory cell array 322, a page buffer unit 325, a voltage generator 323, and a row decoder 324. Although not illustrated in FIG. 4, the non-volatile memory device 320 may further include the memory interface circuit 316 shown in FIG. 2, and may also further include column logic, a pre-decoder, a temperature sensor, a command decoder, an address decoder, and the like.

The control logic circuit 321 may generally control various operations within the non-volatile memory device 320. The control logic circuit 321 may output various control signals in response to a command CMD and/or address ADDR from the memory interface circuit 316 in FIG. 2. For example, the control logic circuit 321 may output a voltage control signal CTRL_vol, a row address X-ADDR, and a column address Y-ADDR.

The memory cell array 322 may include a plurality of memory blocks BLK1 to BLKz, z is an integer greater than or equal to 3, and each of the plurality of memory blocks BLK1 to BLKz may include a plurality of memory cells. The memory cell array 322 may be connected to the page buffer unit 325 through a bit line BL and may be connected to the row decoder 324 through a word line WL, a string select line SSL, and a ground select line GSL.

In some implementations, the memory cell array 322 may include a three-dimensional memory cell array, and the three-dimensional memory cell array may include a plurality of NAND strings. Each NAND string may include memory cells each connected to wordlines stacked vertically on the substrate. According to some implementations, the memory cell array 322 may include a two-dimensional memory cell array, and the two-dimensional memory cell array may include a plurality of NAND strings arranged along the row and column directions.

The page buffer unit 325 may include a plurality of page buffers PB1 to PBn, n is an integer greater than or equal to 3, and the plurality of page buffers PB1 to PBn may be respectively connected to memory cells through a plurality of bit lines BL. The page buffer unit 325 may select at least one bit line among the bit lines BL in response to a column address Y-ADDR. The page buffer unit 325 may operate as a write driver or a sense amplifier depending on the operation being performed. For example, during a program operation, the page buffer unit 325 may apply a bit line voltage corresponding to data to be programmed to a selected bit line. During a read operation, the page buffer unit 325 may detect data stored in a memory cell by detecting the current or voltage of the selected bit line.

The voltage generator 323 may generate various types of voltages for performing read, program, and erase operations based on a voltage control signal CTRL_vol. For example, the voltage generator 323 may generate a read voltage, a program voltage, a program verify voltage, an erase voltage, etc. as a word line voltage VWL.

The row decoder 324 may select one of a plurality of word lines WL and one of a plurality of string select lines SSL in response to a row address X-ADDR. For example, during a program operation, the row decoder 324 may apply a program voltage and a program verify voltage to a selected word line. During a read operation, the row decoder 324 may apply a read voltage to the selected word line.

According to some implementations, the control logic circuit 321 may monitor whether a plurality of memory blocks BLK1 to BLKz are free blocks and provide free block information FBI for the plurality of monitored memory blocks BLK1 to BLKz to the storage controller 310.

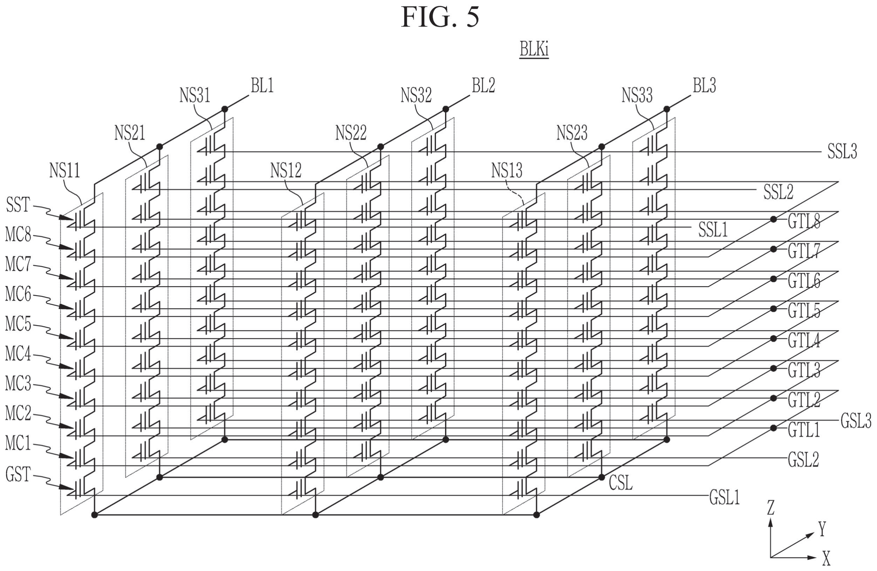

FIG. 5 is a drawing for explaining a three-dimensional structure of a memory cell array according to some implementations. When the non-volatile memory device 320, according to some implementations, is implemented as a 3D V-NAND flash memory, each of the plurality of memory blocks, BLK1 to BLKz, provided by the non-volatile memory device 320 in FIG. 4 may be represented as an equivalent circuit, as illustrated in FIG. 5.

The memory block BLKi illustrated in Fig. 5 represents a three-dimensional memory block formed in a three-dimensional structure on a substrate. For example, a plurality of memory NAND strings included in a memory block BLKi may be formed in a direction perpendicular to the substrate.

Referring to FIG. 5, a memory block BLKi may include a plurality of memory NAND strings NS11 to NS33 connected between bit lines BL1, BL2, BL3 and a common source line CSL. Each of the plurality of memory NAND strings NS11 to NS33 may include a string select transistor SST, a plurality of memory cells MC1, MC2, ..., MC8, and a ground select transistor GST. In FIG. 5, each of the plurality of memory NAND strings NS11 to NS33 is illustrated as including eight memory cells MC1, MC2, ..., MC8, but is not necessarily limited thereto.

The string select transistors SST may be connected to corresponding string select lines SSL1, SSL2, SSL3. A plurality of memory cells MC1, MC2, ..., MC8 may be respectively connected to corresponding gate lines GTL1, GTL2, ..., GTL8. Gate lines GTL1, GTL2, ..., GTL8 may correspond to word lines, and some of the gate lines GTL1, GTL2, ..., GTL8 may correspond to dummy word lines. The ground select transistor GST may be connected to the corresponding ground select line GSL1, GSL2, GSL3. The string select transistor SST may be connected to the corresponding bitline BL1, BL2, BL3, and the ground select transistor GST may be connected to the common source line CSL.

Word lines of the same height (e.g. wordlines corresponding to GTL1) are commonly connected, and ground select lines GSL1, GSL2, GSL3 and string select lines SSL1, SSL2, SSL3 can be separated, respectively. In FIG. 5, a memory block BLK is illustrated as being connected to eight gate lines GTL1, GTL2, ..., GTL8 and three bit lines BL1, BL2, BL3, but is not necessarily limited thereto.

FIGs. 6 and 7 are ladder diagrams illustrating write operations of a storage system according to some implementations. Specifically, FIG. 6 describes the write operation of the storage system 100 when the EBR mode is not performed, and FIG. 7 describes the write operation of the storage system 100 when the EBR mode is performed.

Referring to FIGs. 1 to 3 and 6, the host device 200 provides a first write request RQ_w1 for first data D1 to the storage device 300 (S11).

The host device 200 may provide a logical address LA for the first data D1 to the storage device 300, with the first write request RQ_w1 and the first data D1 together.

The storage controller 310 controls the buffer memory 330 so that a first write data buffer area WDB1 is allocated to the buffer memory 330 in response to receiving the first write request RQ_w1 (S12).

The storage controller 310 may receive the first write request RQ_w1 for the first data D1. The buffer manager 314 may allocate the first write data buffer area WDB1 to the buffer memory 330 in response to receiving the first write request RQ_w1.

The storage controller 310 controls the buffer memory 330 so that the write operation for the first data D1 is performed in the first write data buffer area WDB1 (S13).

The first data D1 may be provided to the first write data buffer area WDB1 through the host interface 315, and the buffer manager 314 may control the first data D1 to be temporarily stored in the first write data buffer area WDB1.

The storage controller 310 provides a first response signal RSP1 for the first write request RQ_w1 to the host device 200 in response to the first data D1 being written to the first write data buffer area WDB1 (S14).

The first response signal RSP1 may be a host request complete signal for the first write request RQ_w1.

The storage controller 310 provides the first data D1 and the first program command WCMD1 for the first data D1 to the non-volatile memory device 320 in response to the first data D1 being written to the first write data buffer area WDB1 (S15).

The storage controller 310 may provide the first data D1 temporarily stored in the first write data buffer area WDB1 and the first program command WCMD1 for the first data D1 to the non-volatile memory device 320 through the memory interface 316. Although not illustrated, FTL 312 may perform an address mapping operation based on the logical address LA to convert it into an address ADDR, which is a physical address where the first data D1 is to be stored, and the address ADDR may be provided to a non-volatile memory device 320 together with the first program command WCMD1. Although step S14 is illustrated in FIG. 6 as preceding step S15, this is not limited thereto, and according to some implementations, step S15 may precede step S14 or be performed together with it.

The non-volatile memory device 320 performs a program operation for the first data D1 and the first program command WCMD1 (S16).

The non-volatile memory device 320 provides a second response signal RSP2 for the first program command WCMD1 to the storage controller 310 in response to the completion of the program operation for the first data D1 (S17).

The second response signal RSP2 may be an internal signal of the storage device 300 and may be a complete signal for the first program command WCMD1.

The storage controller 310 controls the buffer memory 330 so that the first write data buffer area WDB1 in the buffer memory 330 is released in response to receiving the second response signal RSP2(S18).

The storage controller 310 may receive a second response signal RSP2 to the first program command WCMD1. The buffer manager 314 may release the first write data buffer area WDB1 allocated within the buffer memory 330 in response to receiving the second response signal RSP2. In response to the EBR mode not being performed, the buffer manager 314 may release the first write data buffer area WDB1 allocated within the buffer memory 330 after completion of the program operation of step S16.

With the release of the first write data buffer area WDB1 in the buffer memory 330, the first data D1 may be removed from the cache. In response to the EBR mode not being performed, the first data D1 may have a cache lifetime during the first period T1 between the completion of step S13 and the completion of step S18 in the first write data buffer area WDB1.

With additional reference to FIG. 7, the host device 200 provides a second write request RQ_w2 for second data D2 to the storage device 300 (S21).

The host device 200 may provide a logical address LA for the second data D2 to the storage device 300, with the second write request RQ_w2 and the second data D2 together.

The storage controller 310 controls the buffer memory 330 so that a second write data buffer area WDB2 is allocated to the buffer memory 330 in response to receiving the second write request RQ_w2 (S22).

The storage controller 310 may receive a second write request RQ_w2 for the second data D2. The buffer manager 314 may allocate a second write data buffer area WDB2 in the buffer memory 330 in response to receiving a second write request RQ_w2.

The storage controller 310 controls the buffer memory 330 so that a write operation for the second data D2 is performed in the second write data buffer area WDB2 (S23).

The second data D2 may be provided to the second write data buffer area WDB2 through the host interface 315, and the buffer manager 314 may control the second data D2 to be temporarily stored in the second write data buffer area WDB2.

The storage controller 310 provides a third response signal RSP3 for the second write request RQ_w2 to the host device 200 in response to the second data D2 being written to the second write data buffer area WDB2 (S24).

The third response signal RSP3 may be a host request complete signal for the second write request RQ_w2. By transmitting the third response signal RSP3 in step S24, the storage device 300 may satisfy a high-speed data transfer speed for the protocol with the host device 200.

The storage controller 310 provides the second data D2 and the second program command WCMD2 for the second data D2 to the non-volatile memory device 320 in response to the second data D2 being written to the second write data buffer area WDB2 (S25).

The storage controller 310 may provide second data D2 temporarily stored in the second write data buffer area WDB2 and a second program command WCMD2 for the second data D2 to the non-volatile memory device 320 through the memory interface 316. Although not illustrated, FTL 312 may performs an address mapping operation based on a logical address LA to convert an address ADDR where the second data D2 is to be stored, and the address ADDR may be provided to a non-volatile memory device 320 together with a second program command WCMD2. Although step S24 is illustrated in FIG. 7 as preceding step S25, this is not a limitation, and step S25 may precede step S24 or be performed together with it according to some implementations.

The non-volatile memory device 320 performs a program operation for the second data D2 and the second program command WCMD2 (S26).

The storage controller 310 controls the buffer memory 330 so that the second write data buffer area WDB2 in the buffer memory (330) is released in response to transmission of the second program command WCMD2 for the second data D2 (S27).

In response to the transmission of the second data D2 and the second program command WCMD2 in step S25, the buffer manager 314 may release the second write data buffer area WDB2 in the buffer memory 330. In response to the EBR mode being performed, the buffer manager 314 may release the second write data buffer area WDB2 allocated within the buffer memory 330 before the completion of the program operation of step S26. Although step S26 is illustrated in FIG. 6 as preceding step S27, this is not limited thereto, and according to some implementations, step S26 may precede step S27 or may be performed together with it.

The non-volatile memory device 320 provides a fourth response signal RSP4 for the second program command WCMD2 to the storage controller 310 in response to the completion of the program operation for the second data D2 (S28).

The fourth response signal RSP4 may be an internal signal of the storage device 300 and may be a complete signal for the second program command WCMD2.

With the release of the second write data buffer area WDB2 in the buffer memory 330, the second data D2 may be removed from the cache. In response to the EBR mode being performed, the second data D2 may have a cache lifetime during a second period T2 between the completion of step S23 and the completion of step S27 in the second write data buffer area WDB2.

Referring to FIGS. 6 and 7 together, the second data D2 is removed from the buffer memory 330 before the program operation, so the second interval T2, which is the cache lifetime of the second data D2, may be shorter than the first interval T1, which is the cache lifetime of the first data D1.

When the EBR mode is performed, while the program operation of step S27 is performed after the second interval T2, the write data buffer area WDB for subsequent data within the buffer memory 330 may be reallocated and the subsequent data may be temporarily stored in the write data buffer area WDB. By performing EBR mode, the storage device 300 can satisfy high-speed data transfer rates for the protocol with the host device 200. Therefore, when the storage device 300 performs a write operation in EBR mode, it may be suitable for sequential write pattern that requires a high-speed write operation.

The first interval T1, which is the cache lifetime of the first data D1, may be longer than the second interval T2, which is the cache lifetime of the second data D2, because the first data D1 is removed from the buffer memory 330 after the program operation. When, during the cache lifetime in which data is cached, the storage device 300 receive a read request for cache data, a cache hit occurs, which can increase the read speed of the storage device 300. As the cache lifetime for data becomes longer, the speed performance of the read operation of the storage device 300 can be improved. Therefore, the storage device 300 not performing the EBR mode when performing a write operation may be suitable for read-after-write that sequentially requests a subsequent read operation.

The storage device 300 may dynamically control the performance of the EBR mode according to information provided from an operation request RQ of the host device 200 or the state of the non-volatile memory device 320, thereby improving the overall operation performance.

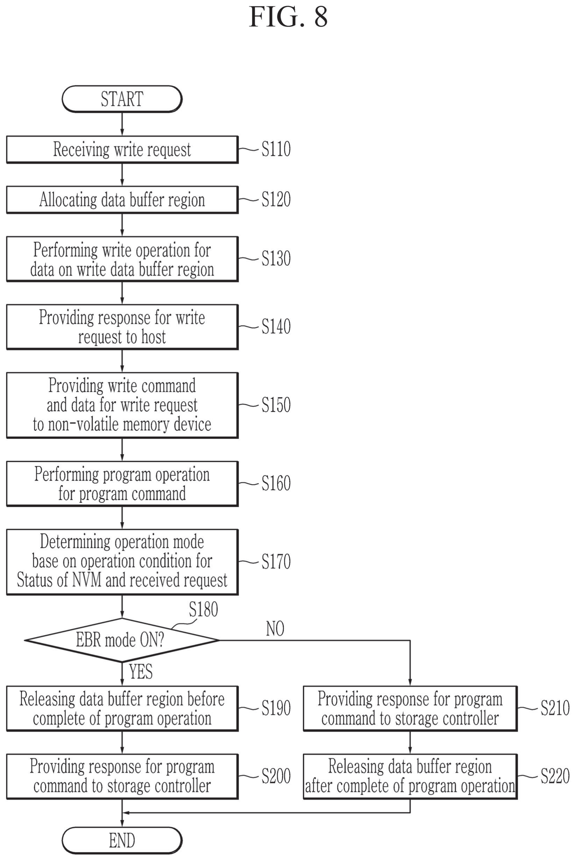

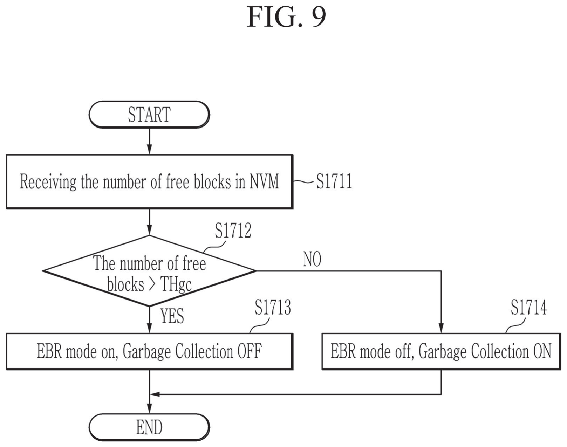

FIG. 8 is a flowchart illustrating a method of operating a storage device according to some implementations. FIG. 9 is a diagram illustrating a method of operating a storage device according to some implementations. Specifically, FIG. 9 is a flowchart specifically illustrating an example of step S170 of FIG. 8.

Referring to FIGs. 1 to 3 and 8, the storage device 300 receives the write request RQ_w from the host device 200 (S110).

The storage device 300 may receive the write request RQ_w for data DATA and the logical address LA for data DATA from the host device 200. The step S110 may correspond to step S11 of Fig. 6 and step S21 of Fig. 7.

The storage controller 310 allocates a write data buffer area WDB within the buffer memory 330 in response to receiving the write request RQ_w (S120).

The storage controller 310 may receive the write request RQ_w for data DATA. The buffer manager 314 may allocate the write data buffer area WDB in the buffer memory 330 in response to receiving the write request RQ_w. The step S120 may correspond to step S12 of FIG. 6 and step S22 of FIG. 7.

The storage controller 310 performs a write operation on data DATA in the write data buffer area WDB (S130).

Data DATA may be provided to the write data buffer area WDB through the host interface 315, and the buffer manager 314 may control the data DATA to be temporarily stored in the write data buffer area WDB. The step S130 may correspond to step S13 of FIG. 6 and step S23 of FIG. 7.

The storage controller 310 provides a response signal to the write request RQ_w to the host device 200 in response to data DATA being written to the write data buffer area WDB (S140).

The response signal may be a host request complete signal for the write request RQ_w. The step S140 may correspond to step S14 of FIG. 6 and step S24 of FIG. 7.

The storage controller 310 provides data DATA and a program command for the data DATA to a non-volatile memory device 320 in response to data DATA being written to a write data buffer area WDB (S150).

The storage controller 310 may provide data DATA temporarily stored in the write data buffer area WDB, a program command for the data DATA, and an address ADDR corresponding to the logical address LA of the data DATA to a non-volatile memory device 320 through a memory interface 316. The step S150 may correspond to step S15 of FIG. 6 and step S25 of FIG. 7.

A non-volatile memory device 320 performs a program operation on data DATA based on data DATA and the program command for data DATA (S160).

The step S160 may correspond to step S16 of FIG. 6 and step S26 of FIG. 7.

The storage controller 310 determines the operation mode of the storage device 300 based on the state of the non-volatile memory device 320 and predetermined operation conditions for the received write request RQ_w (S170).

The buffer manager 314 may dynamically determine the EBR operation mode of the storage device 300 based on a state of the non-volatile memory device 320 and a predetermined operation condition for at least one of the received write requests RQ_w, and control the release timing of the write data buffer area WDB through the determined EBR mode.

The determined operating conditions may include, but are not limited to, whether a garbage collection operation of the non-volatile memory device 320 is performed, whether a namespace ID corresponding to an EBR mode is received, a logical address LA corresponding to mode setting data for the EBR mode, whether data DATA for a write request RQ_w is hot data, whether a sequential write pattern is used, etc., and the above-determined operating conditions may be changed depending on the implementation.

The buffer manager 314 may efficiently control the performance of the EBR mode by considering the operating environment of the storage device 300, and can improve the overall operating performance of the storage device 300 through efficient control of the EBR mode.

Taking FIG. 9 as an example, the storage controller 310 receives the number of free blocks in the non-volatile memory device 320 (S1711).

FTL 312 may receive free block information FBI of FIG. 4 for a plurality of memory blocks within the non-volatile memory device 320 from the non-volatile memory device 320. FTL 312 may check the number of free blocks in a non-volatile memory device 320 based on free block information FBI.

The storage controller 310 compares the number of free blocks with the garbage collection threshold THgc and checks whether the number of free blocks is greater than the garbage collection threshold THgc (S1712).

FTL 312 may compare the number of free blocks in the non-volatile memory device 320 with the predetermined garbage collection threshold value THgc, and determine whether to perform a garbage collection operation based on the comparison result. Information on whether a determined garbage collection operation is performed may be provided from the FTL 312 to the buffer manager 314. The garbage collection threshold THgc is an integer greater than or equal to 2.

If the number of free blocks is greater than the garbage collection threshold THgc, the FTL 312 determines not to perform a garbage collection operation for the non-volatile memory device 320, and the buffer manager 314 determines to perform the EBR mode (S1713).

When the non-volatile memory device 320 does not perform garbage collection, the storage device 300 can satisfy the data transfer speed of the sequential write pattern, and the buffer manager 314 can perform the EBR mode in the write operation to satisfy the high-speed data transfer speed.

If the number of free blocks is not greater than the garbage collection threshold THgc, the FTL 312 determines whether to perform a garbage collection operation for the non-volatile memory device 320, and the buffer manager 314 determines whether to not perform the EBR mode (S1714).

When the non-volatile memory device 320 performs garbage collection, the storage device 300 cannot satisfy the data transfer speed of the sequential write pattern, so the buffer manager 314 may decide not to perform the EBR mode in the write operation.

The storage controller 310 checks whether the determined EBR mode is performed (S180).

When the execution of EBR mode is determined, the storage controller 310 releases the write data buffer area WDB in the buffer memory 330 before the completion of the program operation of the non-volatile memory device 320 (S190).

In response to the transmission of data DATA and program command for data DATA in step S150, the buffer manager 314 can release the write data buffer area WDB in the buffer memory 330. In response to performing the EBR mode, the buffer manager 314 may release the write data buffer area WDB allocated within the buffer memory 330 before completion of the program operation of step S160. The step S190 may correspond to step S27 of Fig. 7.

The non-volatile memory device 320 provides a response signal for a program command to the storage controller 310 in response to the completion of a program operation for data DATA (S200).

The above response signal is an internal signal of the storage device 300 and may be a complete signal for the program command provided in step S150. The step S200 may correspond to step S28 of Fig. 7.

When non-performance of EBR mode is determined, the non-volatile memory device 320 provides a response signal for the program command to the storage controller 310 in response to the completion of the program operation for data DATA(S210).

The above response signal is an internal signal of the storage device 300 and may be a complete signal for the program command provided in step S150. The step S210 may correspond to step S17 of Fig. 6.

If the EBR mode is not performed, the storage controller 310 releases the write data buffer area WDB in the buffer memory 330 after the program operation of the non-volatile memory device 320 is completed (S220).

In response to the reception of the response signal in step S210, the buffer manager 314 may release the write data buffer area WDB in the buffer memory 330. In response to not performing the EBR mode, the buffer manager 314 may release the allocated write data buffer area WDB within the buffer memory 330 after completion of the program operation of step S160. The step S220 may correspond to step S18 of Fig. 6.

The storage device 300 may perform EBR mode in a write operation in response to a situation requiring high-speed data transfer, such as a sequential write pattern. The storage device 300 may not perform EBR mode in response to a situation advantageous to a cache hit, such as when high-speed data transfer in a sequential write pattern is difficult to perform based on the state of the non-volatile memory device 320 or when a read request RQ_r is received consecutively (e.g., immediately following, without interruption by another request) after a write request RQ_w.

The storage device 300 can efficiently control the performance of the EBR mode by considering the operating environment, and the overall operating performance of the storage device 300 can be improved through the efficient control of the EBR mode.

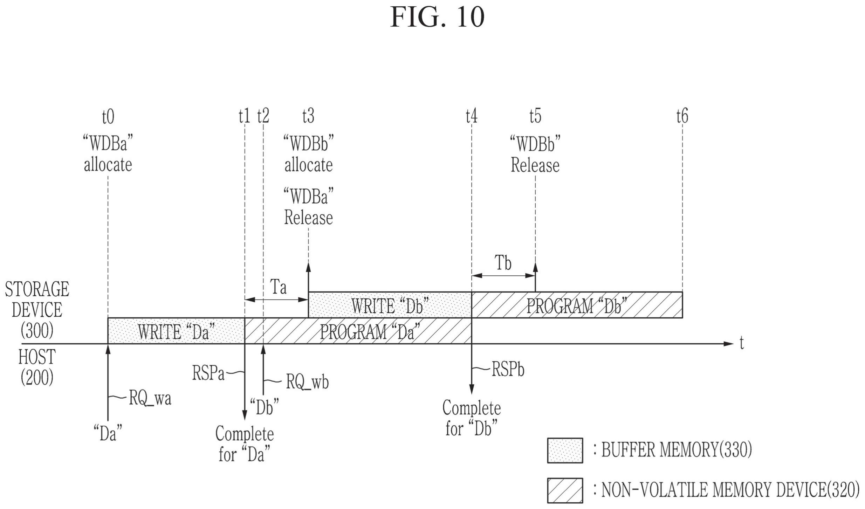

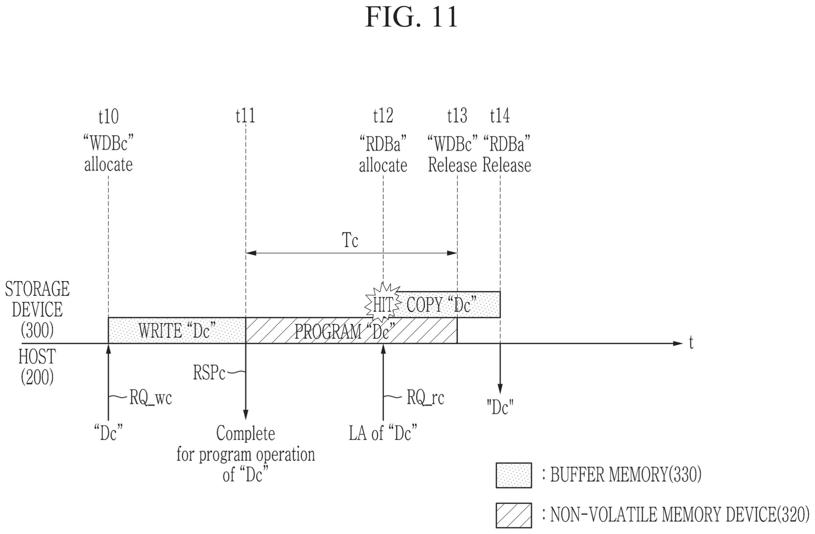

FIGs. 10 and 11 are timing diagrams illustrating a method of operating a storage device according to some implementations. Specifically, FIG. 10 describes the input/output operation of the storage device (300) when performing the EBR mode, and FIG. 11 describes the input/output operation of the storage device (300) when not performing the EBR mode.

Referring to FIGs. 1 to 3 and FIG. 10, at time t0, the host device (200) may provide an a-th write request RQ_wa for an a-th data Da to the storage device 300. The buffer manager 314 may allocate an a-th write data buffer area WDBa in the buffer memory 330 in response to receiving an a-th write request RQ_wa.

After time t0, the storage controller 310 may control the buffer memory 330 so that a write operation for the a-th data Da is performed in the a-th write data buffer area WDBa. The a-th data Da may be provided to the a-th write data buffer area WDBa through the host interface 315, and the buffer manager 314 may perform the write operation on the a-th data Da in the a-th write data buffer area WDBa.

At time t1, the a-th data Da may be written to the a-th write data buffer area WDBa. In response to the a-th data Da being written to the a-th write data buffer area WDBa, the storage controller 310 may provide the host device 200 with an a-th response signal RSPa for the a-th write request RQ_wa. The a-th data Da may have a cache lifetime of the a-th interval Ta after time point t1, and during the a-th interval Ta, the a-th write data buffer area WDBa may be allocated within the buffer memory 330.

In addition, in response to the a-th data Da being written to the a-th write data buffer area WDBa, the a-th data Da and a program command for the a-th data Da may be provided to the non-volatile memory device 320. The non-volatile memory device 320 may perform a program operation on the a-th data Da, in response to reception of the a-th data Da and the program command for the a-th data Da.

At time t2, the host device 200 may provide a b-th write request RQ_wb for a b-th data Db to the storage device 300. However, due to the allocation of the existing a-th write data buffer area WDBa, the buffer manager 314 may wait for the allocation of the write data buffer area for the b-th data Db.

At time t3, the buffer manager 314 may release the allocated a-th write data buffer area WDBa within the buffer memory 330 before the completion of the program operation for the a-th data Da. With the release of the a-th write data buffer area WDBa, the buffer manager 314 may allocate the b-th write data buffer area WDBb to the buffer memory 330. The a-th data Da may have a cache lifetime in the buffer memory 330 during the a-th interval Ta between time points t1 and t3.

After time t3, the buffer manager 314 may perform a write operation on the b-th data Db in the b-th write data buffer area WDBb. While a write operation on the b-th data Db is performed in the b-th write data buffer area WDBb, the non-volatile memory device 320 may perform a program operation on the a-th data (Da).

At time t4, the b-th data Db may be written to the b-th write data buffer area WDBb, and the a-th data Da may be programmed in the non-volatile memory device 320. In response to the b-th data Db being written to the b-th write data buffer area WDBb, the storage controller 310 may provide a b-th response signal RSPb for the b-th write request RQ_wb to the host device 200. The b-th data Db may have a cache lifetime of the b-th interval Tb after time point t4, and during the b-th interval Tb, the b-th write data buffer area WDBb may be allocated within the buffer memory 330.

In addition, in response to the b-th data Db being written to the b-th write data buffer area WDBb, the b-th data Db and a program command for the b-th data Db may be provided to the non-volatile memory device 320. The non-volatile memory device 320 may perform a program operation on the b-th data Db in response to reception of the b-th data Db and the program command for the b-th data Db.

At time t5, the buffer manager 314 may release the allocated b-th write data buffer area WDBb in the buffer memory 330 before the completion of the program operation for the b-th data Db. The b-th data Db may have a cache lifetime in the buffer memory 330 during the b-th interval Tb between time points t4 and t5.

At time t6, the b-th data Db may be programmed into the non-volatile memory device 320.

The storage device 300 can perform a write operation in the buffer memory 330 and a program operation in the non-volatile memory device 320 simultaneously by performing the EBR mode. The simultaneous operation of the buffer memory 330 and the non-volatile memory device 320 in FIG. 10 as described above can improve the performance of a write operation for a write request RQ_w that is received sequentially, such as a sequential write pattern.

With additional reference to FIG. 11, at time t10, the host device 200 may provide a c-th write request RQ_wc for a c-th data Dc to the storage device 300. The buffer manager 314 may allocate a c-th write data buffer area WDBc in the buffer memory 330 in response to receiving the c-th write request RQ_wc.

After time t10, the buffer manager 314 may perform a write operation on the c-th data Dc in the c-th write data buffer area WDBc.

At time t11, the c-th data Dc may be written to the c-th write data buffer area WDBc. In response to the c-th data Dc being written to the c-th write data buffer area WDBc, the storage controller 310 may provide a c-th response signal RSPc for the c-th write request RQ_wc to the host device 200. The c-th data Dc may have a cache lifetime of the c-th interval Tc after time point t11, and during the c-th interval Tc, the c-th write data buffer area WDBc may be allocated within the buffer memory 330.

In addition, in response to the c-th data Dc being written to the c-th write data buffer area WDBc, the c-th data Dc and a program command for the c-th data Dc may be provided to the non-volatile memory device 320. The non-volatile memory device 320 may perform a program operation on the c-th data Dc based on reception of the c-th data Dc and the program command for the c-th data Dc.

At time t12, the host device 200 may provide a c-th read request RQ_rc for the c-th data Dc and a logical address LA for the c-th data Dc to the storage device 300. The buffer manager 314 may allocate an a-th read data buffer area RDBa to the buffer memory 330 in response to receiving the c-th read request RQ_rc for the c data Dc, and may confirm that a cache hit occurs for the c-th data Dc based on the logical address LA for the c-th data Dc. The buffer manager 314 may copy the c-th data Dc cached in the c-th write data buffer area WDBc to the a-th read data buffer area RDBa in response to a cache hit of the c-th data Dc. While a copy operation on the c-th data Dc is performed in the a-th read data buffer area RDBa, the non-volatile memory device 320 can perform a program operation on the c-th data Dc.

At time t13, the c-th data Dc may be programmed into the non-volatile memory device 320. In response to the completion of the program operation for the c-th data Dc, the buffer manager 314 may release the c-th write data buffer area WDBc allocated within the buffer memory 330. The c-th data Dc may have a cache lifetime in the buffer memory 330 during the c-th interval Tc between time points t11 and t13.

At time t14, the c-th data Dc can be copied to the a-th read data buffer area RDBa. In response to the c-th data Dc being copied to the a-th read data buffer area RDBa, the storage device 300 may provide the c-th data Dc to the host device 200. According to some implementations, in response to the storage device 300 providing the c-th data Dc to the host device 200, the buffer manager 314 may release the a-th read data buffer area RDBa allocated within the buffer memory 330.

The storage device 300 may increase the cache lifetime of data by not performing EBR mode and increase the probability of a cache hit when processing consecutively received write requests RQ_w and read requests RQ_r. The operation of the storage device 300 in FIG. 11 can improve the performance of a read operation when a write request RQ_w and a read request RQ_r are provided together, such as a read-after-write pattern.

Referring to FIGs. 10 and 11 together, the storage device 300 can efficiently control the performance of the EBR mode by considering the operating environment, and the overall operating performance of the storage device 300 can be improved through the efficient control of the EBR mode.

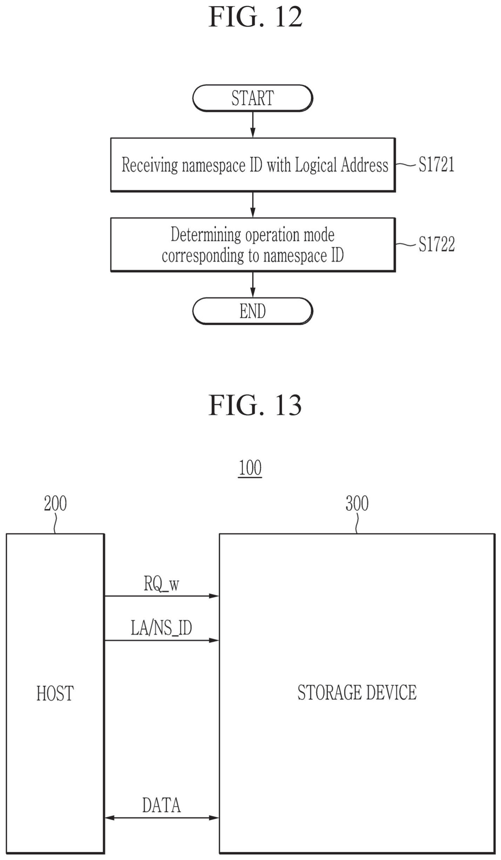

FIGs. 12 to 14 are drawings for explaining a method of operating a storage device according to some implementations. Specifically, FIG. 12 is a flowchart specifically illustrating an example of step S170 of FIG. 8.

Referring to FIGs. 1 to 3 and 12 to 14, the storage device 300 receives the namespace ID NS_ID together with a logical address LA for the write request (RQ_w) from the host device (200) (S1721).

The namespace ID NS_ID may correspond to one of multiple namespaces NS1 to NS3 included in the non-volatile memory device 320. The storage device 300 may logically distinguish and manage multiple namespaces NS1 to NS3 as different memories based on the namespace ID NS_ID.

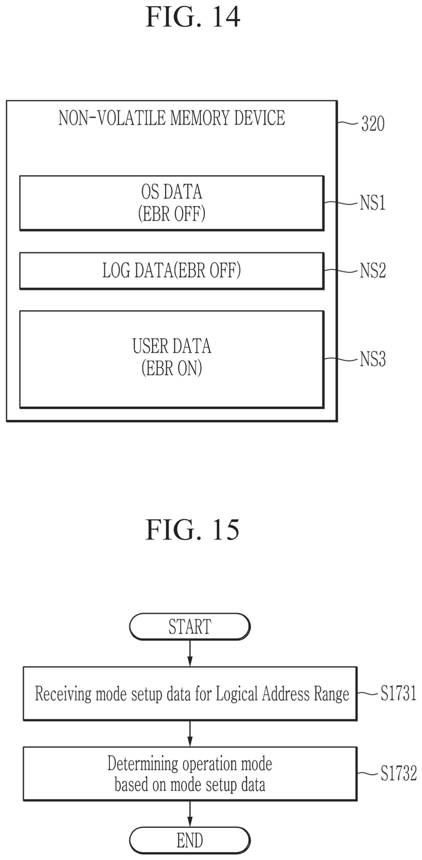

Taking Figure 14 as an example, the first namespace NS1 may store operating system data, the second namespace NS2 may store log data, and the third namespace NS3 may store user data. The above operating system data may include boot data and operating system file data, and the above log data may include system logs, application logs, analysis data, and the above user data may include application data and user files. In some implementations, the size of the third namespace NS3 may be larger than the size of the first namespace NS1, and the size of the third namespace NS3 may be larger than the size of the second namespace NS2.

The storage device 300 determines an operation mode corresponding to the namespace ID NS_ID (S1722).

The buffer manager 314 may determine whether to perform EBR mode in response to the namespace ID NS_ID received from the host device 200.

Taking FIG. 14 as an example, in response to the storage device 300 receiving a namespace ID NS_ID corresponding to the first namespace NS1, the buffer manager 314 may determine non-performance of the EBR mode in performing a write operation for the first namespace NS1. In response to the storage device 300 receiving a namespace ID NS_ID corresponding to the second namespace NS2, the buffer manager 314 may determine not to perform the EBR mode in performing a write operation for the second namespace NS2. In response to the storage device 300 receiving a namespace ID NS_ID corresponding to the third namespace NS3, the buffer manager 314 may determine to perform the EBR mode in performing a write operation for the third namespace NS3.

The storage device 300 can improve the performance of input/output operations according to the access characteristics of the namespace by performing EBR mode differently when performing a write operation for each namespace.

FIGs. 15 to 17 are drawings for explaining a method of operating a storage device according to some implementations.

Referring to FIGs. 1 to 3 and FIGs. 15 to 17, the storage device 300 receives mode setting data SD for a logical address range LA_R (S1731).

The storage device 300 may receive mode setting data SD for a logical address range LA_R together with the operation request RQ from the host device 200. The above operation requests RQ may include write requests and setup requests, etc. Mode setting data SD may contain information on whether EBR mode is performed when performing a write operation for the logical address range LA_R.

When the operation request RQ is a write request, mode setting data SD for the logical address range LA_R of the write request may be provided to the storage device 300 together with the write request. Additionally, the logical address range LA_R may be a logical address LA that is the target of a write operation.

When the operation request RQ is a setup request, a logical address range LA_R for the setup request and mode setup data SD for the logical address range LA_R may be provided to the storage device 300. The above setup request may be a setup request for EBR mode corresponding to the logical address range LA_R. Additionally, the logical address range LA_R may be a range for the logical address LA of the write request RQ_w.

When the operation request RQ is a setup request, the buffer manager 314 may create and manage an operation mode setup table ST based on the received logical address range LA_R and mode setup data SD. The storage device 300 may receive the logical address range LA_R for a write request provided after a setup request, and obtain mode setting data SD corresponding to the logical address range LA_R through an operation mode setting table ST.

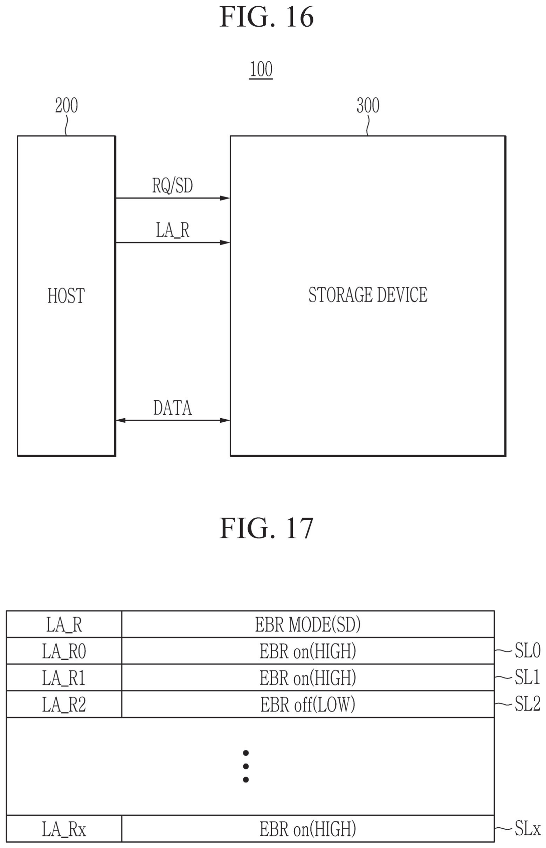

Taking Fig. 17 as an example, the operation mode setting table ST may include the 0-th to x-th setting lists SL0 to SLx. The x is an integer greater than or equal to 3. Each of the 0-th to x-th setup lists SL0 to SLx may include information on the logical address range and whether EBR mode is performed.

The 0-th setup list SL0 may include information about the 0-th logical address range LA_R0 and 'performance for EBR mode', and the information about 'performance for EBR mode' may be set to logic high. The first setup list SL1 may include information about the first logical address range LA_R1 and 'performance for EBR mode', and the information about 'performance for EBR mode' may be set to logic high. The second setup list SL2 may include information about the second logical address range LA_R2 and 'non-performance for EBR mode', and the information about 'non-performance for EBR mode' may be set to logical low. The x-th setup list SLx may include information about the x-th logical address range LA_Rx and 'performance for EBR mode', and the information about 'performance for EBR mode' may be set to logic high.

The storage device 300 determines the operation mode based on the mode setting data SD (S1732).

When mode setting data SD is received along with a write request, the buffer manager 314 may determine whether to perform the EBR mode based on the received mode setting data SD. If the mode setting data SD includes 'performance for EBR mode', the storage device 300 may perform EBR mode when performing a write operation for the logical address range LA_R. In addition, if the mode setting data SD includes 'non-performance for EBR mode', the storage device 300 may not perform the EBR mode when performing a write operation for the logical address range LA_R.

When mode setting data SD is received together with a setup request, the buffer manager 314 may determine whether to perform the EBR mode based on a write request received after the setting request and the logical address LA of the write request.

Taking Fig. 17 as an example, when the storage device 300 performs a write operation for a logical address LA within the 0-th logical address range LA_R0, the storage device 300 may perform the EBR mode based on the operation mode setting table ST. When the storage device 300 performs a write operation for a logical address LA within the first logical address range LA_R1, the storage device 300 may perform the EBR mode based on the operation mode setting table ST. When the storage device 300 performs a write operation for a logical address LA within the second logical address range LA_R2, the storage device 300 may not perform the EBR mode based on the operation mode setting table ST. When the storage device 300 performs a write operation for a logical address LA within the x-th logical address range LA_Rx, the storage device 300 may perform the EBR mode based on the operation mode setting table ST.

The storage device 300 can improve the performance of input/output operations according to the operating characteristics of the host device 200 by performing the EBR mode differently according to the request of the host device 200.

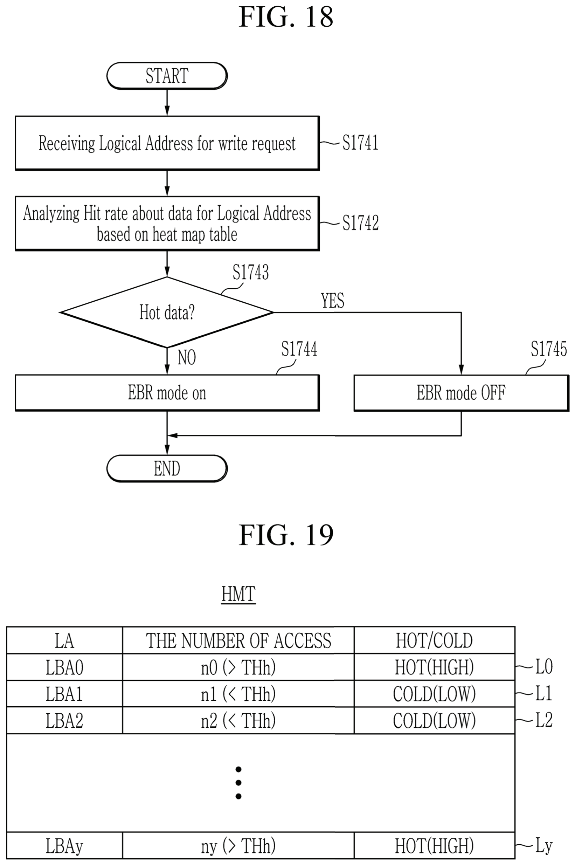

FIGs. 18 and 19 are drawings for explaining a method of operating a storage device according to some implementations. Specifically, FIG. 18 is a flowchart specifically illustrating an example of step S170 of FIG. 8.

Referring to FIGs. 18 and 19, the storage device 300 receives a logical address LA for a write request RQ_w from the host device 200 (S1741).

The storage controller 310 analyzes a hit rate for data of a logical address LA based on a heat map table HMT (S1742).

The buffer manager 314 may manage the heat map table HMT based on a logical address LA for an operation request RQ, and manage access frequency information of data and whether the data is hot/cold for the logical address LA, and analyze the hit rate of the data through the heat map table HMT.

Taking Fig. 19 as an example, the heat map table HMT may include a 0-th to y-th lists L0 to Ly. The above y is an integer greater than or equal to 3. Each of the 0-th to y-th lists L0 to Ly may include information for a logical address LA, the number of accesses, and whether the data is hot or cold. The 0-th list L0 may include the 0-th LBA LBA0, the 0-th count n0, and information about 'hot data', where the 0-th count n0 may be greater than a hot data threshold THh, and the information about 'hot data' may be set to logic high. The hot data threshold THh is a natural number greater than or equal to 1. The first list L1 may include information about the first LBA LBA1, the first count n1, and 'cold data', where the first count n1 may be less than the hot data threshold THh, and the information about the 'cold data' may be set to a logic low. The second list L2 may include information about the second LBA LBA2, the second count n2, and 'cold data', where the second count n2 may be less than the hot data threshold THh, and the information about the 'cold data' may be set to logic low. The y-th list Ly may contain the y-th LBA LBAy, the y-th count ny, and information about 'cold data', where the y-th count ny may be greater than the hot data threshold THh, and the information about 'hot data' may be be set to logic high.

The storage controller 310 checks whether data is hot data based on the logical address LA (S1743).

The buffer manager 314 may determine whether data is hot data based on the received logical address LA and heat map table HMT and determine whether to perform EBR mode.

If the data for the logical address LA is not hot data, the buffer manager 314 determines whether to perform EBR mode S1744.

If the data for the logical address LA is cold data, the buffer manager 314 may perform EBR mode.

If data for a logical address LA is hot data, the buffer manager 314 determines non-performance of EBR mode (S1745).

If data for a logical address LA is hot data, the buffer manager 314 may increase the cache lifetime of the hot data by not performing EBR mode and improve the performance of read operations that may be performed later.

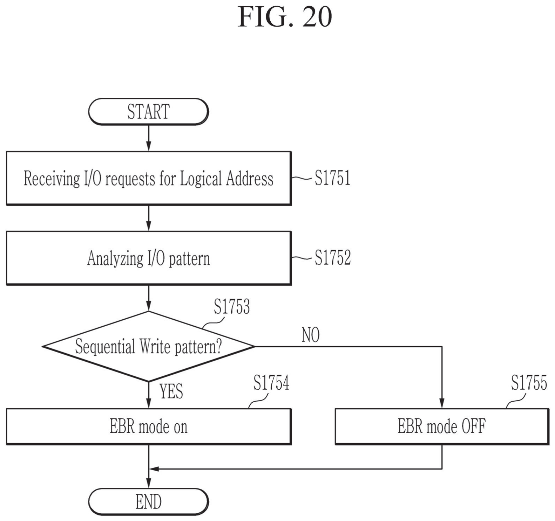

FIG. 20 is a drawing illustrating a method of operating a storage device according to some implementations. Specifically, FIG. 20 is a flowchart specifically illustrating an example of step S170 of FIG. 8.

Referring to FIG. 20, the storage device 300 receives multiple operation requests RQ for logical addresses LA from the host device 200 (S1751).

The storage controller 310 analyzes input/output patterns for multiple operation requests RQ (S1752).

The workload manager 313 may analyze input/output patterns for multiple operation requests RQs in various ways. For example, when write requests RQ_w are received sequentially for consecutive logical addresses LA, the workload manager 313 may determine the input/output pattern for multiple operation requests RQ as a sequential write pattern. As another example, if the write request RQ_w and the read request RQ_r are sequentially provided for data of the same logical address LA, the workload manager 313 may determine the input/output pattern for multiple operation requests RQ as a read-after-write pattern.

The storage controller 310 checks whether the input/output pattern of multiple operation requests RQ is a sequential write pattern (S1753).

The buffer manager 314 may decide to perform EBR mode based on the input/output pattern determination of the workload manager 313.

If the workload manager 313 determines that the input/output pattern for multiple operation requests RQ is a sequential write pattern, the buffer manager 314 determines to perform EBR mode (S1754).

If the workload manager 313 determines that the input/output pattern for multiple operation requests RQ is not a sequential write pattern, the buffer manager 314 determines non-performance of the EBR mode (S1755).

For example, if the workload manager 313 determines that the input/output pattern for multiple operation requests RQ is a read-then-write pattern, the buffer manager 314 may decide not to perform EBR mode.

The buffer manager 314 can efficiently control the performance of the EBR mode by considering the input/output patterns of multiple operation requests RQ received by the storage device 300, and can improve the overall operation performance of the storage device 300 through the efficient control of the EBR mode.

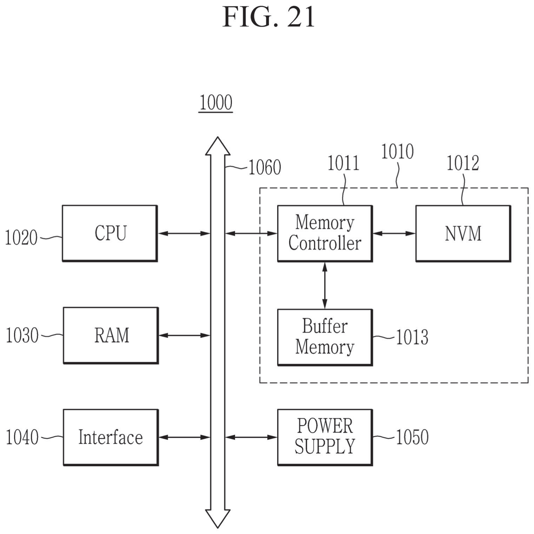

FIG. 21 is a block diagram illustrating a computing system including a storage device according to some implementations.

Referring to FIG. 21, a computing system 1000 according to some implementations may include a processor 1020, a RAM 1030, an interface device 1040, a storage device 1010, a power supply device 1050, and a bus 1060.

The processor 1020, RAM 1030, interface device 1040, storage device 1010, and power supply device 1050 may be connected to each other via a bus 1060. The bus 1060 corresponds to a path through which data is moved.

The processor 1020 may include at least one of a microprocessor, a digital signal processor, a microcontroller, and logic devices capable of performing functions similar thereto. Additionally, the processor 1020 may serve as a host device of the storage device 1010 and provide data and input/output requests to the storage device 1010.

RAM 1030 may be used as working memory to perform the functions of the processor 1020.

The interface device 1040 may perform a function of transmitting data to a communication network or receiving data from a communication network. The interface device 1040 may be wired or wireless. For example, the interface device 1040 may include an antenna or a wireless transceiver.

The storage device 1010 may include a memory controller 1011, a non-volatile memory device 1012, and a buffer memory 1013.

The memory controller 1011 may control program/read/erase operations on data for a non-volatile memory device 1012. The non-volatile memory device 1012 may include a plurality of non-volatile memory chips.

The memory controller 1011 may manage the buffer memory 1013, and the memory controller 1011 may temporarily store data and/or input/output requests to be input/output to the non-volatile memory device 1012 through the buffer memory 1013.

The memory controller 1011 may allocate and release a write data buffer area in the buffer memory 1013 in response to a write request provided from the processor 1020, and temporarily store data in the allocated write data buffer area.

The memory controller 1011 may improve the overall operating performance of the storage device 1010 by dynamically controlling EBR performance in a write operation according to information provided from an input/output request of a host device or the state of a non-volatile memory device 1012, as described in FIGs. 1 to 20.

The power supply unit 1050 may supply operating power to the processor 1020, the RAM 1030, the interface device 1040, and the memory system (1010).

The computing system 1000 may be applied to a personal digital assistant (PDA), a portable computer, a web tablet, a wireless phone, a mobile phone, a digital music player, a memory card, or any electronic product capable of transmitting and/or receiving information in a wireless environment.

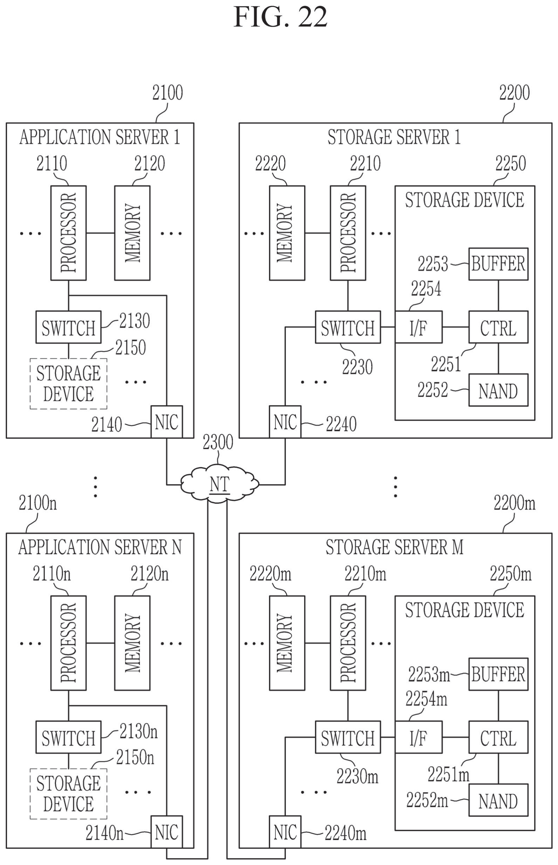

FIG. 22 is a block diagram illustrating a data center to which a storage device according to some implementations is applied.

Referring to FIG. 22, a network system 2000 is a facility that collects various data and provides services, and may be referred to as a data center or a data storage center. The network system 2000 may include application servers 2100 to 2100n and storage servers 2200 to 2200m, and the application servers 2100 to 2100n and the storage servers 2200 to 2200m may be referred to as computing nodes. According to some implementations, the number of the application servers 2100 to 2100n and the number of the storage servers 2200 to 2200m may be selected in various ways, and the number of the application servers 2100 to 2100n and the number of the storage servers 2200 to 2200m may be different from each other.

The application servers 2100 to 2100n and the storage servers 2200 to 2200m may communicate with each other through a network 2300. The network 2300 may be implemented by using Fibre Channel (FC), ethernet, or the like. At this time, FC is a medium used for high-speed data transmission, and may use an optical switch providing high performance and/or high availability. Depending on the access method of the network 2300, the storage servers 2200 to 2200m may be provided as a file storage, a block storage, or an object storage.

In some implementations, the network 2300 may be a network dedicated for storage, such as a storage area network (SAN). For example, the SAN may be an FC-SAN that uses a FC network and is implemented according to a FC Protocol (FCP). In some implementations, the SAN may be an IP-SAN using a TCP/IP network and implemented according to the iSCSI (SCSI over TCP/IP or Internet SCSI) protocol. In some implementations, the network 2300 may be a general network, such as a TCP/IP network. For example, the network 2300 may be implemented according to protocols such as FC over Ethernet (FCoE), network attached storage (NAS), and NVMe over Fabrics (NVMe-oF).

Hereinafter, the description will focus on an application server 2100 and a storage server 2200. Description of the application server 2100 may also be applied to another application server 2100n, and description of the storage server 2200 may also be applied to another storage server 2200m.

The application server 2100 may include a processor 2110 and a memory 2120. The processor 2110 may control an overall operation of the application server 2100, and may access the memory 2120 to execute commands and/or data loaded in the memory 2120. According to some implementations, the number of the processor 2110 and the number of the memory 2120 included in the application server 2100 may be selected in various ways. In some implementations, the processor 2110 and the memory 2120 may be configured as a processor-memory pair. In some implementations, the numbers of the processor 2110 and the memory 2120 may be set different from each other.

The application server 2100 may further include a storage device 2150. At this time, the number of the storage device 2150 included in the application server 2100 may be selected in various ways depending on the implementation. The processor 2110 may provide command to the storage device 2150, and the storage device 2150 may operate in response to the command received from the processor 2110. However, the present disclosure is not limited thereto, and the application server 2100 may not include the storage device 2150.

The application server 2100 may further include a switch 2130 and network interface card (NIC) 2140. Under the control of the processor 2110, the switch 2130 may selectively connect the processor 2110 and the storage device 2150 or selectively connect the NIC 2140 and the storage device 2150. The NIC 2140 may include a wired interface, a wireless interface, a Bluetooth interface, an optical interface, and the like. In some implementations, the processor 2110 and the NIC 2140 may be integrated into one. In some implementations, the storage device 2150 and the NIC 2140 may be integrated into one.

The application server 2100 may store data, requested to be stored by a user or client, in one of the storage servers 2200 to 2200m through the network 2300. In addition, the application server 2100 may obtain the data requested to be read by a user or client from one of the storage servers 2200 to 2200m through the network 2300. For example, the application server 2100 may be implemented as a web server or database management system (DBMS), or the like.

The application server 2100 may access a memory 2120n or a storage device 2150n included in another application server 2100n through the network 2300, and/or may access memories 2220 and 2220m or storage devices 2250 and 2250m included in storage servers 2200 and 2200m through the network 2300. Accordingly, the application server 2100 may perform various operations with respect to data stored in the application servers 2100 and 2100n and/or the storage servers 2200 and 2200m. For example, the application server 2100 may execute a command to move or copy data between the application servers 2100 and 2100n and/or the storage servers 2200 and 2200m. In this case, data may be moved through the network 2300 in an encrypted state for security or privacy.

The storage server 2200 may include a processor 2210 and a memory 2220. The processor 2210 may control an overall operation of the storage server 2200, and may access the memory 2220 to execute commands and/or data loaded in the memory 2220. According to some implementations, the number of the processor 2210 and the number of the memory 2220 included in the storage server 2200 may be selected in various ways. According to some implementations, the processor 2210 and the memory 2220 may be configured as a processor-memory pair. According to some implementations, the numbers of the processor 2210 and the memory 2220 may be set different from each other.

The processor 2210 may include single core processor or multi-core processor. For example, the processor 2210 may include a general-purpose processor, a central processing unit (CPU), a graphics processing unit (GPU), a digital signal processor (DSP), a microcontroller (MCU), a microprocessor, a network processor, an embedded processor, a field programmable gate array (FPGA), an application-specific instruction set processor (ASIP), an application-specific integrated circuit processor (ASIC), or the like.

The storage server 2200 may further include at least one storage device 2250. The number of the storage device 2250 included in the storage server 2200 may be selected in various ways, depending on the implementation. The storage device 2250 may include a controller (CTRL) 2251, a NAND flash (NAND) 2252, a DRAM 2253, and interface (I/F) 2254. Hereinafter, the configuration and operation of the storage device 2250 will be described in detail. The following description of the storage device 2250 may also be applied to other storage devices 2150, 2150n, and 2250m.

An interface 2254 may provide a physical connection between the processor 2210 and a controller 2251 and a physical connection between a NIC 2240 and the controller 2251. For example, the interface 2254 may be implemented in a direct attached storage (DAS) method that directly connects the storage device 2250 with a dedicated cable. In addition, for example, the interface 2254 may be implemented in various interface methods such as advanced technology attachment (ATA), serial ATA (SATA), external SATA (e-SATA), Small Computer Small Interface (SCSI), a Serial Attached SCSI (SAS), Peripheral Component Interconnection (PCI), PCI express (PCIe), NVM express (NVMe), IEEE 1394, universal serial bus (USB), secure digital (SD) card, multi-media card (MMC), embedded multi-media card (eMMC), compact flash (CF) card interface, or the like.

An interface 2254 may provide a physical connection between the processor 2210 and a controller 2251 and a physical connection between a NIC 2240 and the controller 2251. For example, the interface 2254 may be implemented in a direct attached storage (DAS) method that directly connects the storage device 2250 with a dedicated cable. In addition, for example, the interface 2254 may be implemented in various interface methods such as advanced technology attachment (ATA), serial ATA (SATA), external SATA (e-SATA), Small Computer Small Interface (SCSI), a Serial Attached SCSI (SAS), Peripheral Component Interconnection (PCI), PCI express (PCIe), NVM express (NVMe), IEEE 1394, universal serial bus (USB), secure digital (SD) card, multi-media card (MMC), embedded multi-media card (eMMC), compact flash (CF) card interface, or the like.

The NAND flash 2252 may include a plurality of NAND flash memory cells. However, the present disclosure is not limited thereto, and the storage device 2250 may include a non-volatile memory other than the NAND flash 2252, for example, resistive RAM (ReRAM), phase change RAM (PRAM), or magnetic RAM (MRAM), or may include magnetic storage media or optical storage media.

The dynamic RAM (DRAM) 2253 may be used as a buffer memory. For example, the DRAM 2253 may be double data rate synchronous DRAM (DDR SDRAM), low-power DDR (LPDDR) SDRAM, graphics DDR (GDDR) SDRAM, Rambus DRAM (RDRAM) or high-bandwidth memory (HBM). However, the present disclosure is not limited thereto, and the storage device 2250 may use a volatile memory or non-volatile memory other than the DRAM as a buffer memory. The DRAM 2253 may temporarily store (buffer) data to be written to the NAND flash 2252 or data read from the NAND flash 2252.

The controller 2251 may allocate and release a write data buffer area in the DRAM 2253 in response to a write request provided from the processor 2110 to 2110n, 2210 to 2210m and temporarily store data in the allocated write data buffer area.

The controller 2251 may improve the overall operating performance of the storage device 2250 by dynamically controlling EBR performance in a write operation according to information provided from an input/output request of the processor 2110 to 2110n, 2210 to 2210m or the state of a NAND flash 2252, as described in FIGS. 1 to 20.

The storage server 2200 may further include a switch 2230 and the NIC 2240. Under the control of the processor 2210, the switch 2230 may selectively connect the processor 2210 and the storage device 2250, or may selectively connect the NIC 2240 and the storage device 2250. According to some implementations, the processor 2210 and the NIC 2240 may be integrated into one. According to some implementations, the storage device 2250 and the NIC 2240 may be integrated into one.

While this disclosure contains many specific implementation details, these should not be construed as limitations on the scope of what may be claimed. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

## Claims

1. A storage device comprising:
a non-volatile memory device (320, 1012) configured to store first data (DATA) and second data (DATA);
a buffer memory (330, 1013) configured to allocate, in response to receiving a first write request (RQ_w, RQ_wa) for the first data (Da) and a second write request (RQ_w, RQ_wb) for the second data (Db), a first data buffer area (DB, WDBa) for storing the first data (Da) and a second data buffer area (DB, WDBb) for storing the second data (Db); and
a storage controller (310) configured to
release, based on a first operating condition, the first data buffer area (DB, WDBa) before a completion of a first program operation for writing the first data (Da) in the non-volatile memory device (320, 1012), and
release, based on a second operating condition, the second data buffer area (DB, WDBb) after a completion of a second program operation for writing the second data (Db) in the non-volatile memory device (320, 1012).

2. The storage device of claim 1, wherein:
the storage controller (310) includes (i) a flash translation layer (312) configured to control a garbage collection operation for the non-volatile memory device (320, 1012) and (ii) a buffer manager (314) configured to manage an operation of the buffer memory (330, 1013),
the buffer manager (314) is configured to release, in response to a non-performance of the garbage collection operation, the first data buffer area (DB, WDBa) before the completion of the first program operation, and
the buffer manager (314) is configured to release, in response to a performance of the garbage collection operation, the second data buffer area (DB, WDBb) after the completion of the second program operation.

3. The storage device of claim 2, wherein:
a number of free blocks in the non-volatile memory device (320, 1012) is less than a threshold value based on the second data (Db) being stored in the second data buffer area (DB, WDBb).

4. The storage device of any one of claims 1 to 3, wherein:
the storage controller (310) is configured to manage the first data (Da) based on a first namespace (NS1) and manage the second data (D2) based on a second namespace (NS2) that is different from the first namespace (NS1).

5. The storage device of claim 4, wherein:
the first data (Da) is user data, and the second data (Db) is log data.

6. The storage device of any one of claims 1 to 5, wherein:
the storage controller (310) is configured to determine the first operating condition being satisfied based on a first logical address of the first write request (RQ_w, RQ_wa), and determine the second operating condition is satisfied based on a second logical address of the second write request (RQ_w, RQ_wb).

7. The storage device of claim 6, wherein:
the storage controller (310) is configured to determine the first data (Da) as cold data and the second data (Db) as hot data.

8. The storage device of claim 6 or 7, wherein:
the storage controller (310) includes a workload manager (313) configured to determine an input/output pattern for the first and second write requests (RQ_w, RQ_wa, RQ_wb) based on the first and second logical addresses respectively.

9. The storage device of claim 8, wherein:
the workload manager (313) is configured to determine that the first write request (RQ_w, RQ_wa) is a write request for a sequential write pattern and determine that the second write request (RQ_w, RQ_wb) is a write request for a read-after-write pattern.

10. The storage device of any one of claims 1 to 9, wherein:
the storage controller (310) is configured to receive a third write request for a third data consecutively after receiving the first write request (RQ_w, RQ_wa), and
a first logical address for the first data (Da) and a third logical address for the third data are consecutive.

11. The storage device of any one of claims 1 to 10, wherein:
the storage controller (310) is configured to receive a read request for the second data (Db) consecutively after receiving the second write request (RQ_w, RQ_wb).

12. A method of operating storage device comprising:
receiving (S110) a write request (RQ_w) for data (DATA);
allocating (S120), in response to the write request (RQ_w), a data buffer area (WDB) in a buffer memory (330, 1013);
storing (S130) the data (DATA) in the data buffer area (WDB);
outputting (S140) a response signal (RSP1) to the write request (RQ_w);
performing (S160) a program operation for writing the data (DATA) in a non-volatile memory device (320, 1012); and
determining (S170) a release timing of the data buffer area (WDB) based on at least one of a state of the non-volatile memory device (320, 1012) and an operating condition for the write request (RQ_w).

13. The method of operating storage device of claim 12, wherein:
the determining (S170) the release timing of the data buffer area (WDB) includes:
receiving (S1711) the number of free blocks in the non-volatile memory device (320, 1012), and
comparing (S1712) the number of free blocks with a threshold value (THgc).

14. The method of operating storage device of claim 12, wherein:
the determining (S170) the release timing of the data buffer area (WDB) includes:
receiving (S1721) a namespace ID together with a logical address for the write request, and
determining (S1722) an operation mode for the data buffer area (WDB) corresponding to the namespace ID.

15. The method of operating storage device of claim 12, wherein:
the determining (S170) the release timing of the data buffer area (WDB) includes:
receiving (S1741) a logical address for the write request,
analyzing (S1742) a hit rate for data of the logical address based on a heat map table,
checking (1743) whether the data is hot data based on the logical address, and
determining (S1744, S1745) an operation mode for the data buffer area (WDB) based on whether the data is hot data.
